# EUROPEAN PATENT APPLICATION

(11) **EP 4 279 270 A1**
(43) Date of publication of application: **22.11.2023**
(21) Application number: 22739316.2
(22) Date of filing: 05.01.2022
(51) Int. Cl.: B32B 27/32, B65D 65/40

(54) **MULTILAYER FILM**

(30) Priority: 12.01.2021 JP 2021002830
(71) Applicant: TOYOBO CO., LTD., Osaka-shi Osaka 5300001 (JP)
(72) Inventor: KASHIWA, Mitsuhiro, Inuyama-shi, Aichi 484-8508 (JP); YAMAZAKI, Atsushi, Inuyama-shi, Aichi 484-8508 (JP); NAKANO, Mahiro, Inuyama-shi, Aichi 484-8508 (JP)
(74) Representative: Vossius & Partner Patentanwälte Rechtsanwälte mbB
(86) International application number: PCT/JP2022/000136
(87) International publication number: WO 2022/153906

(57) **Abstract**

It is an object of the present invention to provide a laminated film which can form a laminated structure mainly composed of a polypropylene film and composed of substantially a single resin species having a low environmental load, and has gas barrier properties and adhesiveness required for a packaging material when an inorganic thin film layer is laminated.

The laminated film includes a substrate layer (A) mainly composed of a polypropylene-based resin, a surface layer (B) on at least one surface of the substrate layer (A), and a coating layer laminated on the surface layer (B), wherein the laminated film satisfies the following requirements (I) to (III): (I) (a)/(b)≤7.00 is satisfied, where (a) is Martens hardness of a coating layer-side surface measured with a test force of 0.1 mN, and (b) is Martens hardness of the coating layer-side surface measured with a test force of 7 mN;(II) a total of a maximum peak height (Rp) and maximum valley depth (Rv) of the coating layer-side surface measured with a scanning probe microscope is 30.0 nm or less; and(III) an oxygen permeation rate measured under conditions of 23°C×65% RH is 100 cc/m²/day/atm or more and 1200 cc/m²/day/atm or less.

## Description

### TECHNICAL FIELD

The present invention relates to a laminated film. More specifically, the present invention relates to a gas barrier laminated film which has a low environmental load in production and disposal and has both excellent gas barrier performance and sufficient adhesive strength between layers as a packaging material.

### BACKGROUND ART

In recent years, regulations for reducing the use of disposable plastics have been strengthened in various countries including Europe. Against this background, there is growing international awareness of resource circulation and growing waste problems in emerging countries. Therefore, for plastic packaging materials required for foods and pharmaceuticals and the like, environmentally friendly products are required from the viewpoint of 3R (recycle, reuse, reduce).

Examples of performance required for the above-described environmentally friendly packaging material include (1) including a material that is easily recycled, (2) having gas barrier performance that can cut off various gases and extend the best-before expiration, and (3) having a laminated structure with a less environmental load (for example, no organic solvent is used, the amount of materials used itself is small, and recycling by monomaterialization is possible).

In recent years, use of a polypropylene film has attracted attention in order to enable the above (1) and (3). The polypropylene film is generally used in a wide range of applications such as packaging of foods and various products, electrical insulation, and surface protection films. The polypropylene film can exhibit high water vapor barrier properties from its molecular structure. Furthermore, as a sealant to be bonded to a surface substrate film, a polypropylene-based or polyethylene-based heat-sealing resin is generally used, and therefore for example, by using a polypropylene film for a surface substrate and an un-stretched polypropylene sheet for the sealant, it is possible to achieve the monomaterialization of the entire packaging material while having gas barrier properties, and it is possible to design a packaging material which is environmentally friendly such as being easily recycled.

However, regarding the gas barrier properties of (2), the polypropylene film has water vapor barrier properties, but does not have a sufficient value as compared with, for example, a transparent inorganic vapor-deposited polyester film generally considered to have excellent water vapor barrier properties, and disadvantageously has very poor oxygen barrier properties. Meanwhile, a film obtained by laminating, on a polypropylene film, a polymer resin composition generally said to have relatively high oxygen barrier properties, such as polyvinyl alcohol, an ethylene vinyl alcohol copolymer, a polyvinylidene chloride resin, or polyacrylonitrile, has been used (see, for example, Patent Documents 1 to 3).

However, since the gas barrier coating film using the polymer resin composition of polyvinyl alcohol or an ethylene vinyl alcohol copolymer has high humidity dependency, the gas barrier properties are deteriorated under high humidity, and the water vapor barrier properties and water-resistant adhesiveness are not sufficient. The polyvinylidene chloride resin and the polyacrylonitrile have low humidity dependency, but have problems that water vapor barrier properties are not sufficient, and there is a high risk that harmful substances are generated at the time of disposal and incineration.

Furthermore, in order to exhibit sufficient barrier performance in any of the above-described barrier coat layers, it is necessary to laminate the barrier coat layer having a film thickness of 1 µm or more. When the film thickness of the barrier coat layer is large, impurities may occur at the time of recycling, and therefore recycling itself may become difficult. This is not suitable from the viewpoint of monomaterialization using a single material. Furthermore, there is also a problem of printing defect due to coating uniformity and unevenness in processing steps such as printing.

In order to solve these problems, a gas barrier laminated body in which a metal thin film made of aluminum or the like or an inorganic thin film made of an inorganic oxide such as silicon oxide or aluminum oxide is formed on the surface of a plastic substrate film such as a polyester film is generally used. Among them, a gas barrier laminated body including a thin film of an inorganic oxide such as silicon oxide, aluminum oxide, or a mixture thereof is widely used because it is not necessary to use an aluminum foil, the gas barrier laminated body is transparent so that the contents can be confirmed, and the formed film is also very thin and does not inhibit recyclability.

Also in a polypropylene film, a method in which gas barrier properties can be imparted by laminating an inorganic thin film is disclosed (for example, Patent Document 4). However, it has been pointed out that since the polypropylene film has nonpolar molecules, surface energy is small, and therefore adhesion is not sufficient in inorganic thin film processing.

Meanwhile, a method in which adhesion is improved by controlling the orientation angle of the molecular chain of a polypropylene film is disclosed (for example, Patent Document 5). However, no mention is made of gas barrier properties and water-resistant adhesion.

In the formation of an inorganic thin film layer, a thin film cannot be formed not only due to an adhesive force but also as a result of a protruding portion produced by surface unevenness, and therefore there is also a problem that barrier properties or the like become poor. Meanwhile, a biaxially oriented polypropylene-based film has poor slipperiness due to its excellent flexibility and flatness, and blocking in which films stick to each other occurs. Therefore, an antiblocking agent is generally added to form surface unevenness. Therefore, thin film formation provided by vapor-deposition or coating is insufficient due to the formed surface unevenness, leading to defects of barrier properties and the like.

In order to solve these problems, there is disclosed a method in which gas barrier properties can be imparted by laminating an inorganic thin film on the polymer resin composition of polyvinyl alcohol (for example, Patent Document 6). However, when the polymer resin composition of polyvinyl alcohol is used, the polymer resin composition still has high humidity dependency, and therefore water-resistant adhesiveness may be deteriorated.

### PRIOR ART DOCUMENT

### PATENT DOCUMENTS

Patent Document 1: JP-A-2000-52501
Patent Document 2: JP-A-H04-359033
Patent Document 3: JP-A-2003-231221
Patent Document 4: WO2017/221781
Patent Document 5: JP-B-6380381
Patent Document 6: JP-A-2020-131674

### SUMMARY OF THE INVENTION

### PROBLEMS TO BE SOLVED BY THE INVENTION

In Patent Documents 1 to 4, the barrier performance and the adhesiveness are insufficient. Patent Document 5 does not mention the barrier properties, and Patent Document 6 does not mention improvement in the water-resistant adhesiveness.

The present invention has been made in view of the problems of the prior art.

That is, an object of the present invention is to provide a laminated film which can form a laminated structure mainly composed of a polypropylene film and composed of substantially a single resin species having a low environmental load, and has gas barrier properties and adhesiveness required for a packaging material when an inorganic thin film layer is laminated.

### MEANS FOR SOLVING THE PROBLEMS

The present inventors have found that a film exhibiting good gas barrier properties and adhesiveness when an inorganic thin film layer is laminated can be provided by designing a predetermined laminated film suitable for required performance, and have completed the present invention.

That is, the present invention comprises the following constitutions.
1. A laminated film comprising: a substrate layer (A) mainly composed of a polypropylene-based resin; a surface layer (B) on at least one surface of the substrate layer (A); and a coating layer laminated on the surface layer (B), wherein the laminated film satisfies the following requirements (I) to (III):
   (I) (a/(b)≤-7.00 is satisfied, where (a) is Martens hardness of a coating layer-side surface measured with a test force of 0.1 mN, and (b) is Martens hardness of the coating layer-side surface measured with a test force of 7 mN;
   (II) a total of a maximum peak height (Rp) and maximum valley depth (Rv) of the coating layer-side surface measured with a scanning probe microscope is 30.0 nm or less; and
   (III) an oxygen permeation rate measured under conditions of 23°C×65% RH is 100 cc/m²/day/atm or more and 1200 cc/m²/day/atm or less.
2. The laminated film according to 1., comprising an inorganic thin film layer laminated on the coating layer of the laminated film.
3. The laminated film according to 1. or 2., wherein an amount of adhesion of the coating layer is 0.10 g/m² or more and 1.00 g/m² or less.
4. A laminated body obtained by laminating an olefin-based sealant layer on one surface of the laminated film according to any one of 1. to 3..
5. The laminated body according to 4., wherein the laminated body has laminate strength of 1.5 N/15 mm or more.
6. The packaging material comprising at least one layer of laminated film according to 1. To 5..

### EFFECT OF THE INVENTION

By such a technique, the present inventors can provide a laminated film having required performance such as barrier properties and adhesiveness required for a packaging material when an inorganic thin film layer is laminated in consideration of the environment.

### MODE FOR CARRYING OUT THE INVENTION

Hereinafter, the present invention will be described in detail.

A laminated film comprising: a substrate layer (A) mainly composed of a polypropylene-based resin; a surface layer (B) on at least one surface of the substrate layer (A); and a coating layer laminated on the surface layer (B), wherein the laminated film satisfies the following requirements (I) to (III):
(I) (a)/(b)≤7.00 is satisfied, where (a) is Martens hardness of a coating layer-side surface measured with a test force of 0.1 mN, and (b) is Martens hardness of the coating layer-side surface measured with a test force of 7 mN;
(II) a total of a maximum peak height (Rp) and maximum valley depth (Rv) of the coating layer-side surface measured with a scanning probe microscope is 30.0 nm or less; and
(III) an oxygen permeation rate measured under conditions of 23°C×65% RH is 100 cc/m²/day/atm or more and 1200 cc/m²/day/atm or less.

Hereinafter, each layer of the laminated film will be explained.

### [Substrate film layer]

### (1) Substrate layer (A)

The substrate layer (A) mainly composed of a polypropylene-based resin constituting the laminated film of the present invention is preferably a biaxially oriented film, and polypropylene obtained by copolymerizing ethylene and/or an α-olefin having 4 or more carbon atoms in an amount of 0.5 mol% or less can also be used as polypropylene used for the layer. Such a copolymerized polypropylene is also included in the polypropylene of the present invention (hereinafter, referred to as a "polypropylene"). The copolymerization component is preferably 0.3 mol % or less, more preferably 0.1 mol % or less, and a complete homopolypropylene containing no copolymerization component is the most preferable. When ethylene and/or an α-olefin having 4 or more carbon atoms is copolymerized in an amount of more than 0.5 mol%, crystallinity and rigidity may be excessively reduced, leading to an increase in a heat shrinkage rate at high temperatures. Such a resin may be used by blending.

The meso-pentad fraction ([mmmm] %) that is an index of stereoregularity of the polypropylene constituting the substrate layer (A) of the laminated film of the present invention and is measured by ¹³C-NMR is preferably 98 to 99.5%. The meso-pentad fraction is more preferably 98.1% or more, further preferably 98.2% or more. When the meso-pentad fraction of the polypropylene is small, elastic modulus may be lowered, resulting in insufficient heat resistance. The actual upper limit is 99.5%.

The mass average molecular weight (Mw) of the polypropylene constituting the substrate layer (A) of the laminated film of the present invention is preferably 180,000 to 500,000. When the Mw is smaller than 180,000, melt viscosity may be low, and therefore the resin is not stable during casting is caused, leading to deterioration in film formability. When the Mw is more than 500,000, the amount of the component having a molecular weight of 100,000 or less is 35% by mass, resulting in deterioration in a heat shrinkage rate at high temperatures. The lower limit of the Mw is more preferably 190,000, further preferably 200,000, and the upper limit of the Mw is more preferably 320,000, further preferably 300,000, particularly preferably 250,000.

The number average molecular weight (Mn) of the polypropylene constituting the substrate layer (A) of the laminated film of the present invention is preferably 20,000 to 200,000. When the Mn is smaller than 20,000, melt viscosity may be low, and therefore the resin is not stable during casting is caused, leading to deterioration in film formability. When the Mn is more than 200,000, a heat shrinkage rate at high temperatures is deteriorated. The lower limit of the Mn is more preferably 30,000, further preferably 40,000, particularly preferably 50,000, and the upper limit of the Mn is more preferably 80,000, further preferably 70,000, particularly preferably 60,000.

Also, in the polypropylene constituting the substrate layer (A), the Mw/Mn that is an index of a molecular weight distribution is preferably 2.8 to 10. The Mw/Mn is more preferably 2.8 to 8, further preferably 2.8 to 6, particularly preferably 2.8 to 5.4. The lower limit is preferably 3 or more, more preferably 3.3 or more.

The molecular weight distribution of the polypropylene can be adjusted by polymerization of different molecular weight components at multiple stages in a serial plant, by offline blending of different molecular weight components with a kneader, by polymerization with a different-performance catalyst blended, or by use of a catalyst capable of attaining a desired molecular weight distribution.

The polypropylene constituting the substrate layer (A) of the laminated film of the present invention preferably has a melt flow rate (MFR; 230°C, 2.16 kgf) of 2 g/10 min to 20 g/10 min when the Mw/Mn is in the range of 2.8 to 5.4.

The lower limit of the MFR of the polypropylene of the substrate layer (A) is more preferably 3 g/10 min, further preferably 4 g/10 min, particularly preferably 5 g/10 min. The upper limit of the MFR of the polypropylene of the substrate layer (A) is more preferably 15 g/10 min, further preferably 12 g/10 min.

When the Mw/Mn and MFR of the polypropylene constituting the substrate layer (A) are in these ranges, the heat shrinkage rate at high temperatures can also be kept small. Adhesion to a cooling roll is also good and film formability is excellent.

### (2) Surface layer (B)

The MFR of the polypropylene resin composition constituting the surface layer (B) of the laminated film of the present invention is preferably 1.0 g/10 min to 10.0 g/10 min. The lower limit of the MFR of the polypropylene resin composition constituting the surface layer (B) is more preferably 2.0 g/10 min, further preferably 3.0 g/10 min, particularly preferably 4.0 g/10 min. The upper limit of the MFR of the polypropylene resin composition constituting the surface layer (B) is more preferably 9.0 g/10 min, further preferably 8.0 g/10 min, particularly preferably 5.5 g/10 min. Within this range, the film formability is also good and the appearance is also excellent. When the MFR of the polypropylene resin composition constituting the surface layer (B) is less than 1.0 g/10 min, the difference in viscosity between the substrate layer (A) and the surface layer (B) is increased when the MFR of the polypropylene constituting the substrate layer (A) is large, and therefore uniformity (original fabric uniformity) is apt to occur during film formation. When the MFR of the polypropylene resin composition constituting the surface layer (B) is more than 10 g/10 min, adhesion to a cooling roll is deteriorated, and air is entrained, resulting in deterioration in smoothness. Defects originating from the deteriorated smoothness may be increased.

As the polypropylene-based resin having a smaller MFR, polypropylene obtained by copolymerizing ethylene and/or an α-olefin having 4 or more carbon atoms can also be used. Examples of the α-olefin having 4 or more carbon atoms include 1-butene, 1-hexene, 4-methyl-1-pentene, and 1-octene. Maleic acid having polarity, or the like may be used as the other copolymerization components.

The total content of ethylene and/or α-olefin having 4 or more carbon atoms, and the other copolymerization components is preferably 8.0 mol% or less. When the total content for copolymerization is more than 8.0 mol%, the film may be whitened, resulting in a poor appearance, or stickiness may occur, resulting difficult film formation.

Two or more of these resins to be used may be blended. In the case of blending, the individual resins may be copolymerized in an amount of more than 8.0 mol%, but the blending amount of monomers other than propylene is preferably 8.0 mol% or less in terms of monomer units.

As the polypropylene-based resin having a larger MFR, the copolymerization polypropylene can also be used, or a homopolypropylene resin can also be used.

An antiblocking agent to be used can be appropriately selected from inorganic particles such as silica, calcium carbonate, kaolin, and zeolite particles, and organic particles such as acrylic, polymethacrylic, and polystyrene particles. Among them, silica or polymethacrylic particles are particularly preferably used. The average particle size of the antiblocking agent is preferably 1.0 to 3.0 um, and more preferably 1.0 to 2.7 um. The measurement method of the average particle diameter as used herein is a method in which a photograph is taken with a scanning electron microscope, Feret's diameters in a horizontal direction are measured using an image analyzer device, and an average value thereof is displayed.

The amount of the antiblocking agent added is not particularly limited as long as the amount of the antiblocking agent added into the surface layer (B) and the surface layer (C) is adjusted so that haze, a dynamic friction coefficient, center plane average roughness (SRa), and an air release time are within predetermined ranges.

The wet tension of the surface of the surface layer (B) of the laminated film of the present invention is preferably 38 mN/m or more. The wet tension indicates a numerical value of the surface tension (mN/m) of a mixed liquid reagent determined to wet the film surface, and is related to the wettability of a printing ink and an adhesive. When the wet tension is 38 mN/m or more, adhesion to an adhesive used for lamination with a vapor-deposited film, a coating film, or a film as another member is improved. In order to set the wet tension to 38 mN/m or more, additives such as an anti-static agent and a surfactant are usually used, but these methods have an effect of lowering a surface resistance value, and therefore it is preferable to perform a physicochemical surface treatment such as a corona treatment or a heat treatment.

For example, in the corona treatment, it is preferable to perform discharge in air using a preheating roll and a treatment roll.

### (3) Surface layer (C)

The laminated film of the present invention may have a surface layer (C) on the surface of the substrate layer (A) opposite to the surface layer (B). The surface layer (C) preferably has a surface having center plane average roughness (SRa) of 0.020 µm or more. The center plane average roughness (SRa) is measured by a three-dimensional roughness meter. The center plane average roughness (SRa) of the surface of the surface layer (C) is more preferably 0.022 um or more, still more preferably 0.025 um or more, and particularly preferably 0.028 um or more. When the center plane average roughness (SRa) of the surface of the surface layer (C) is less than 0.020 um, surface unevenness is small, and the slipperiness of the film, an air release time between the films, and blocking resistance are deteriorated. There are several methods for setting the center plane average roughness (SRa) of the surface of the surface layer (C) within a prescribed range, but the center plane average roughness (SRa) can be adjusted by changing the average particle diameter or the addition amount of the antiblocking agent.

The center plane average roughness (SRa) of the surface of the surface layer (C) of the laminated film of the present invention, the center plane average roughness (SRa) measured by a three-dimensional roughness meter, is preferably 0.040 um or less.

The Martens hardness of the surface layer (C) of the laminated film is preferably 270 N/mm² or more. The Martens hardness is preferably 275 N/mm² or more, more preferably 280 N/mm² or more, and particularly preferably 285 N/mm² or more.

When the Martens hardness is less than 270 N/mm², the surface is soft, and therefore the added antiblocking agent sinks into the resin, resulting in deterioration in slipperiness and blocking resistance. In order to set the Martens hardness to 270 N/mm² or more, it is preferable to use polypropylene obtained by copolymerizing ethylene and/or an α-olefin having 4 or more carbon atoms in an amount of 0.5 mol% or less, and more preferably 0.1 mol% or less. Complete homopolypropylene containing no copolymerization component is most preferable. By setting the meso-pentad fraction ([mmmm]%) of the constituting polypropylene to 98% or more and increasing the degree of crystallinity, the Martens hardness can be increased.

The Martens hardness of the surface layer (C) of the laminated film is preferably 350 N/mm² or less.

The polypropylene resin using in the present invention can be obtained by polymerizing raw material propylene using a known catalyst such as a Ziegler-Natta catalyst or a metallocene catalyst. Especially, in order to eliminate heterophilic binding, a Ziegler-Natta catalyst, a catalyst enabling high-stereoregularity polymerization is preferably used.

As the method for polymerizing propylene as a raw material, a known method may be employed. Examples of the known method include a method for performing the polymerization in an inert solvent such as hexane, heptane, toluene, or xylene, a method for performing the polymerization in a liquid monomer, a method for adding a catalyst to a gaseous monomer and performing gas-phase polymerization, and a method for performing the polymerization by combining these methods.

The substrate layer (A) and/or the surface layer (B) and/or the surface layer (C) of the laminated film of the present invention may contain an additive or other resin. Examples of the additive include an antioxidant, an ultraviolet absorber, a nucleating agent, a pressure-sensitive adhesive, an antifogging agent, a flame retardant, and an inorganic or organic filler. Examples of the other resin include a polypropylene resin other than the polypropylene resin used in the present invention, a random copolymer which is a copolymer of propylene and ethylene and/or an α-olefin having 4 or more carbon atoms, and various elastomers. These materials may be sequentially polymerized using a multi-stage reactor, blended with a polypropylene resin with a Henschel mixer, diluted with polypropylene so as to have a predetermined concentration of a master pellet prepared in advance using a melt kneader, or totally melted and kneaded in advance for use. Furthermore, as long as the object of the present invention is not impaired, a corona discharge treatment, a glow discharge treatment, a flame treatment, or a surface roughening treatment may be performed, and a known anchor coating treatment, printing, and decoration and the like may be performed.

### [Coating layer]

In the present invention, a coating layer is provided on the surface layer (B). By providing the coating layer, it is possible to suppress the appearance of the oligomer and the antiblocking materials from the polypropylene resin. Furthermore, when other layer is laminated on the coating layer, the adhesive force between layers can also be enhanced. In particular, in the formation of the inorganic thin film layer, a thin film cannot be formed not only due to an adhesive force but also as a result of a protruding portion produced by surface unevenness, and therefore there is also a problem that barrier properties or the like become poor. In addition, by using a material having gas barrier properties for the coating layer itself, the gas barrier performance of the laminated film can also be greatly improved. Furthermore, the coating layer prevents the entry of hot water into the substrate, and as a result, the whitening of the film after boiling or retorting can also be reduced.

In the present invention, the amount of adhesion of the coating layer is preferably 0.10 to 1.00 g/m². This makes it possible to uniformly control the coating layer in coating, resulting in a film with less coating uniformity and defects. Furthermore, the protective layer contributes to the suppression of the appearance of oligomers, and therefore haze after retorting is stabilized. The amount of adhesion of the coating layer is preferably 0.15 g/m² or more, more preferably 0.2 g/m² or more, and still more preferably 0.35 g/m² or more, and preferably 0.9 g/m² or less, and more preferably 0.8 g/m² or less. When the amount of adhesion of the coating layer is more than 1.00 g/m², the gas barrier properties are improved, but a cohesive force in the coating layer is insufficient, and the uniformity of the coating layer is also deteriorated, and therefore uniformity and defects may occur in the coating appearance, or the gas barrier properties and the adhesiveness may not be sufficiently exhibited. Meanwhile, when the film thickness of the coating layer is less than 0.10 g/m², sufficient gas barrier properties and adhesion between layers may not be obtained.

Examples of the resin composition used for the coating layer of the present invention include urethane-based, polyester-based, acryl-based, titanium-based, isocyanate-based, imine-based, and polybutadiene-based resins to which an epoxy-based, isocyanate-based, melamine-based or other curing agent is added. Furthermore, a crosslinking agent such as a silicon-based crosslinking agent, an oxazoline compound, a carbodiimide compound, or an epoxy compound can be contained.

In particular, the urethane resin is preferably contained because, in addition to the barrier performance due to the high cohesiveness of the urethane bond itself, a polar group interacts with the inorganic thin film layer and has flexibility due to the presence of an amorphous portion, and therefore damage can be suppressed even when a bending load is applied. A polyester resin is also suitable because the same effect can be expected. In the present invention, it is preferable to contain polyurethane containing polyester and isocyanate as a constituent component, and it is more preferable to add a silicon-based crosslinking agent from the viewpoint that water-resistant adhesiveness can be improved.

### (1) Urethane resin

The glass transition temperature (Tg) of the urethane resin used in the present invention is preferably 100°C or higher, more preferably 110°C or higher, and still more preferably 120°C or higher from the viewpoint of improving barrier properties provided by a cohesive force. However, in order to develop an adhesive force, a flexible resin having excellent flexibility and a Tg of 100°C or lower may be mixed for use. In that case, the addition ratio of the flexible resin is preferably within a range of 0 to 80%. The addition ratio is more preferably within a range of 10 to 70%, and still more preferably within a range of 20 to 60%. When the addition ratio is within the above range, both the cohesive force and the flexibility can be achieved, and the barrier properties and the adhesion are improved. When the addition ratio is more than 80%, the film may become too soft, leading in deterioration in the barrier performance.

It is more preferred in the present invention from the viewpoint of the gas barrier performance thereof to use a urethane resin containing, as a main constituent component, an aromatic or aromatic-aliphatic diisocyanate component.

It is particularly preferred that the urethane resin contains, out of such diisocyanate components, a m-xylylene diisocyanate component. The use of this resin allows that an effect of stacking between its aromatic rings heightens the cohesive force of the urethane bonds further, resulting in good gas barrier performance.

In the present invention, the proportion of the aromatic or aromatic-aliphatic diisocyanate(s) in the urethane resin is preferably set, in 100% by mole of the polyisocyanate component (F), to 50% or more by mole (50 to 100% by mole). The total proportion of the aromatic or aromatic-aliphatic diisocyanate(s) is preferably from 60 to 100% by mole, more preferably from 70 to 100% by mole, even more preferably from 80 to 100% by mole. When the total proportion of the aromatic or aromatic-aliphatic diisocyanate(s) is less than 50% by mole, the laminated film may not gain a good gas barrier performance.

### (2) Silicon-based crosslinking agent

Various crosslinking agents may be blended in the urethane resin used in the present invention as long as the gas barrier properties are not impaired for the purpose of improving the cohesive force and wet heat resistance adhesiveness of the film. Examples of the crosslinking agent include a silicon-based crosslinking agent, an oxazoline compound, a carbodiimide compound, and an epoxy compound. Among them, the silicon-based crosslinking agent is particularly preferable from the viewpoint that water-resistant adhesiveness to the inorganic thin film layer can be particularly improved by blending the silicon-based crosslinking agent. In addition, an oxazoline compound, a carbodiimide compound, or an epoxy compound or the like may be used in combination as the crosslinking agent.

As the silicon-based crosslinking agent, a silane coupling agent is preferable from the viewpoint of crosslinking between an inorganic substance and an organic substance. Examples of the silane coupling agent include hydrolyzable alkoxysilane compounds such as halogen-containing alkoxysilanes (2-chloroethyltrimethoxysilane, 2-chloroethyltriethoxysilane, 3-chloropropyltrimethoxysilane, 3-chloropropyltriethoxysilane, and other chloroC2-4alkyltriC1-4alkoxysilanes), alkoxysilanes having an epoxy group [2-glycidyloxyethyltrimethoxysilane, 2-glycidyloxyethyltriethoxysilane, 3-glycidyloxypropyltrimethoxysilane, 3-glycidyloxypropyltriethoxysilane, and other glycidyloxyC2-4alkyltriC1-4alkoxysilanes, 3-glycidyloxypropylmethyldimethoxysilane, 3-glycidyloxypropylmethyldiethoxysilane, and other glycidyloxyC2-4alkyldiC1-4alkoxysilanes, 2-(3,4-epoxycyclohexyl)ethyltrimethoxysilane, 2-(3,4-epoxycyclohexyl)ethyltriethoxysilane, 3-(3,4-epoxycyclohexyl)propyltrimethoxysilane, and other (epoxycycloalkyl)C2-4alkyltriC1-4alkoxysilanes], alkoxysilanes having an amino group [2-aminoethyltrimethoxysilane, 3-aminopropyltrimethoxysilane, 3-aminopropyltriethoxysilane, and other aminoC2-4alkyltriC1-4alkoxysilanes, 3-aminopropylmethyldimethoxysilane, 3-aminopropylmethyldiethoxysilane, and other aminodiC2-4alkyldiC1-4alkoxysilanes, 2-[N-(2-aminoethyl)amino]ethyltrimethoxysilane, 3-[N-(2-aminoethyl)amino]propyltrimethoxysilane, 3-[N-(2-aminoethyl)amino]propyltriethoxysilane, and other (2-aminoC2-4alkyl)aminoC2-4alkyltriC1-4alkoxysilanes, 3-[N-(2-aminoethyl)amino]propylmethyldimethoxysilane, 3-[N-(2-aminoethyl)amino]propylmethyldiethoxysilane, and other (aminoC2-4alkyl)aminodiC2-4alkyldiC1-4alkoxysilanes], alkoxysilanes having a mercapto group (2-mercaptoethyltrimethoxysilane, 3-mercaptopropyltrimethoxysilane, 3-mercaptopropyltriethoxysilane, and other mercaptoC2-4alkyltriC1-4alkoxysilanes, 3-mercaptopropylmethyldimethoxysilane, 3-mercaptopropylmethyldiethoxysilane, and other mercaptodiC2-4alkyldiC1-4alkoxysilanes), alkoxysilanes having a vinyl group (vinyltrimethoxysilane, vinyltriethoxysilane, and other vinyltriC1-4alkoxysilanes), and alkoxysilanes having an ethylenic unsaturated bond group [2-(meth)acryloxyethyltrimethoxysilane, 2-(meth)acryloxyethyltriethoxysilane, 3-(meth)acryloxypropyltrimethoxysilane, 3-(meth)acryloxypropyltriethoxysilane, and other (meth)acryloxyC2-4alkyltriCl-4alkoxysilanes, 3-(meth)acryloxypropylmethyldimethoxysilane, 3-(meth)acryloxypropylmethyldiethoxysilane, and other (meth)acryloxydiC2-4alkyldiC1-4alkoxysilanes). These silane coupling agents may be used alone or in combination of two or more thereof. Among them, silane coupling agent having an amino group is preferable.

The amount of the silicon-based crosslinking agent added into the coating layer is preferably 0.10 to 3.00 % by mass, more preferably 0.15 to 2.75 % by mass, and still more preferably 0.20 to 2.50% by mass. By the addition of the silane coupling agent, the curing of the film proceeds to improve the cohesive force, and as a result, a film having excellent water-resistant adhesiveness is obtained, and an effect of preventing the appearance of oligomers can also be expected. When the addition amount is more than 3.00% by mass, the curing of the film proceeds to improve the cohesive force, but an unreacted portion may also partially occur, resulting in deterioration in adhesiveness between layers. Meanwhile, when the addition amount is less than 0.10% by mass, a sufficient cohesive force may not be obtained.

### (3) Polyester resin

The polyester resin used in the present invention is produced by polycondensation of a polycarboxylic acid component and a polyhydric alcohol component. The molecular weight of the polyester is not particularly limited as long as the polyester can impart sufficient film toughness, coating suitability, and solvent solubility as a coating material, but is 1000 to 50000 in terms of a number average molecular weight, and more preferably 1500 to 30000. A functional group having a polyester terminal is not particularly limited, and may have an alcohol terminal, a carboxylic acid terminal, or both the terminals. However, when an isocyanate-based curing agent is used in combination, it is necessary to use a polyester polyol mainly composed of an alcohol terminal.

The Tg of the polyester used in the present invention is preferably 15°C or higher. This is because when the temperature is lower than 15°C, the resin has adhesion after coating operation, blocking easily occurs, and winding operation after coating is difficult. This is because when the Tg is 15°C or lower, it is difficult to take measures for preventing blocking even under a situation where pressure near a winding core is high due to the addition of an antiblocking agent. The Tg is more preferably 18°C or higher, and still more preferably 25°C or higher.

The polyester used in the present invention is obtained by polycondensation of a polyvalent carboxylic acid component and a polyhydric alcohol component.

### [Polyvalent carboxylic acid component]

The polyvalent carboxylic acid component of the polyester used in the present invention contains at least one of ortho-oriented aromatic dicarboxylic acid or an anhydride thereof. When the ortho orientation makes it possible to improve solubility in a solvent to uniformly coat the substrate. The uniformly coated protective layer has a small variation in barrier performance, and consequently contributes to the suppression of oligo-whitening. The ortho orientation provides a film having excellent flexibility and an improved interfacial adhesive force, and therefore the damage to the substrate due to a wet heat treatment can be reduced, leading to the suppression of oligomers. Examples of aromatic polycarboxylic acid in which carboxylic acid is substituted at an ortho position or an anhydride thereof include orthophthalic acid or an anhydride thereof, naphthalene 2,3-dicarboxylic acid or an anhydride thereof, naphthalene 1,2-dicarboxylic acid or an anhydride thereof, anthraquinone 2,3-dicarboxylic acid or an anhydride thereof, and 2,3-anthracene carboxylic acid or an anhydride thereof. These compounds may have a substituent at any carbon atom of an aromatic ring. Examples of the substituent include a chloro group, a bromo group, a methyl group, an ethyl group, an i-propyl group, a hydroxyl group, a methoxy group, an ethoxy group, a phenoxy group, a methylthio group, a phenylthio group, a cyano group, a nitro group, an amino group, a phthalimide group, a carboxyl group, a carbamoyl group, an N-ethylcarbamoyl group, a phenyl group, or a naphthyl group. The polyester polyol having a content rate of 70 to 100 mol% with respect to 100 mol% of all the polycarboxylic acid components is particularly preferable because the polyester polyol has a high effect of improving barrier properties and excellent solvent solubility essential for the coating material.

In the present invention, other polyvalent carboxylic acid components may be copolymerized as long as the effects of the invention are not impaired. Specifically, polybasic acids such as succinic acid, adipic acid, azelaic acid, sebacic acid, and dodecanedicarboxylic acid as aliphatic polyvalent carboxylic acid; maleic anhydride, maleic acid, and fumaric acid as unsaturated bond-containing polyvalent carboxylic acid; 1,3-cyclopentane dicarboxylic acid and 1,4-cyclohexanedicarboxylic acid as aliphatic polyvalent carboxylic acid; terephthalic acid, isophthalic acid, pyromellitic acid, trimellitic acid, 1,4-naphthalenedicarboxylic acid, 2,5-naphthalenedicarboxylic acid, 2,6-naphthalenedicarboxylic acid, naphthalic acid, biphenyldicarboxylic acid, diphenic acid and an anhydride thereof, 1,2-bis(phenoxy)ethane-p,p'-dicarboxylic acid, and anhydrides or ester forming derivatives of these dicarboxylic acids as aromatic polyvalent carboxylic acid; and p-hydroxybenzoic acid, p-(2-hydroxyethoxy)benzoic acid and ester-forming derivatives of these dihydroxycarboxylic acids can be used alone or in a mixture of two or more thereof. Among them, succinic acid, 1,3-cyclopentanedicarboxylic acid, isophthalic acid, 2,6-naphthalenedicarboxylic acid, 1,8-naphthalic acid, and difenic acid are preferable from the viewpoint of organic solvent solubility and gas barrier properties.

### [Polyhydric alcohol component]

The polyhydric alcohol component of the polyester used in the present invention is not particularly limited as long as the polyhydric alcohol component can synthesize a polyester exhibiting performance for gas barrier compensation, but it is preferable to contain a polyhydric alcohol component containing at least one selected from the group consisting of ethylene glycol, propylene glycol, butylene glycol, neopentyl glycol, cyclohexanedimethanol, and 1,3-bishydroxyethylbenzene. Among them, ethylene glycol is most preferably used as a main component because it is estimated that as the number of carbon atoms between oxygen atoms is smaller, a molecular chain does not become excessively flexible and oxygen permeation is less likely to occur.

In the present invention, it is preferable to use the above-described polyhydric alcohol component, but other polyhydric alcohol components may be copolymerized as long as the effect of the present invention is not impaired. Specific examples of diols include 1,5-pentanediol, 3-methyl-1,5-pentanediol, 1,6-hexanediol, methylpentanediol, dimethylbutanediol, butylethylpropanediol, diethylene glycol, triethylene glycol, tetraethylene glycol, dipropylene glycol, and tripropylene glycol, and examples of trihydric or higher alcohols include glycerol, trimethylolpropane, trimethylolethane, tris(2-hydroxyethyl)isocyanurate, 1,2,4-butanetriol, pentaerythritol, and dipentaerythritol. In particular, among trihydric alcohols, a polyester in which glycerol and tris(2-hydroxyethyl)isocyanurate are used in combination is derived from a branched structure and has a moderately high crosslinking density, and thus has good organic solvent solubility and an excellent barrier function, and is particularly preferably used.

Examples of catalysts used in reactions for obtaining the polyester of the present invention include acid catalysts such as tin-based catalysts (such as monobutyl tin oxide and dibutyl tin oxide), titanium-based catalysts (such as tetra-isopropyl-titanate and tetra-butyl-titanate), and zirconia-based catalysts such as tetra-butyl-zirconate. It is preferable to use a combination of the above-described titanium-based catalyst, such as tetra-isopropyl-titanate or tetra-butyl-titanate, which has high activity for the ester reaction, and the above-described zirconia catalyst. The amount of the catalyst to be used is 1 to 1000 ppm, and more preferably 10 to 100 ppm, based on the total mass of a reaction raw material to be used. When the amount is less than 1 ppm, it is difficult to obtain the effect as the catalyst, and when the amount is more than 1000 ppm, an urethanization reaction may be disadvantageously inhibited when an isocyanate curing agent is used.

### (4) Isocyanate-based curing agent

In the present invention, when a polyester resin is used as the main agent of the coating agent constituting the coating layer, it is necessary to use an isocyanate-based curing agent as the curing agent to form an urethane resin. In this case, the coating layer becomes a crosslinking system, and therefore heat resistance, abrasion resistance, and rigidity are advantageously improved. Therefore, it is easy to use the present invention for boiling and retort packaging. Meanwhile, there are also problems that the liquid cannot be reused after mixing the curing agent, and a curing (aging) step is required after coating. As advantages, as a simple overcoat varnish, for example, coating production is easily managed without causing a risk of thickening the coating liquid, and the coating liquid can be diluted and reused. In addition, a curing step (so-called aging step) is unnecessary. At this time, the terminal of the polyester to be used can be a polyol, polycarboxylic acid, or a mixture thereof without any problem. Meanwhile, the resin of the coating layer is linear, and therefore heat resistance and abrasion resistance may not be sufficient, or it may be difficult to use the present invention for boiling or retort packaging.

When the curing agent is used for the coating layer, an isocyanate curing system is preferable from the viewpoint of the heat resistance of the film because of coating to the film. In this case, the resin component of the coating material needs to be a polyester polyol. Meanwhile, when an epoxy-based compound is used as the curing agent, polyester polycarboxylic acid is required. In these cases, the coating layer becomes a crosslinking system, and therefore heat resistance, abrasion resistance, and rigidity are advantageously improved. Therefore, it is easy to use the present invention for boiling and retort packaging. Meanwhile, there are also problems that the liquid cannot be reused after mixing the curing agent, and a curing (aging) step is required after coating.

When the polyester has a hydroxyl group, at least a part of the polyisocyanate compound used in the present invention reacts to form an urethane structure, and therefore the resin component is highly polarized, and the gas barrier function can be further enhanced by aggregating polymer chains. When the resin of the coating material is a linear resin, heat resistance and abrasion resistance can be imparted by crosslinking with a trivalent or higher polyisocyanate. The polyisocyanate compound used in the present invention may be any of a diisocyanate, a trivalent or higher polyisocyanate, a low molecular weight compound, and a polymer compound, but it is preferable that an aromatic ring or an aliphatic ring is contained in a part of a skeleton from the viewpoint of the gas barrier improving function. Examples of the isocyanate having an aromatic ring include toluene diisocyanate, diphenylmethane diisocyanate, xylylene diisocyanate, and naphthalene diisocyanate. Examples of the isocyanate having an aliphatic ring include hydrogenated xylylene diisocyanate, hydrogenated toluene diisocyanate, isophorone diisocyanate, norboron diisocyanate, trimers of these isocyanate compounds, and terminal isocyanate group-containing compounds obtained by reacting an excess amount of these isocyanate compounds with, for example, low molecular active hydrogen compounds such as ethylene glycol, propylene glycol, trimethylolpropane, glycerin, sorbitol, ethylenediamine, monoethanolamine, diethanolamine, and triethanolamine, or various polyester polyols, polyether polyols, and high molecular active hydrogen compounds such as polyamides.

### [Inorganic thin film layer]

The laminated film of the present invention may have an inorganic thin film layer on the surface of the coating layer. The inorganic thin film layer is a thin film including a metal or inorganic oxide. A material that forms the inorganic thin film layer is not particularly limited as far as the material is a material that can be made into a thin film. From the viewpoint of gas barrier performance, the material is preferably an inorganic oxide, such as silicon oxide (silica), aluminum oxide (alumina), or a mixture of silicon oxide and aluminum oxide. About the blend ratio between silicon oxide and aluminum oxide in this complex oxide, the metal proportion by mass of Al ranges preferably from 20 to 70% by mass. When the Al concentration is less than 20% by mass, the inorganic thin film layer may be lowered in water vapor barrier performance. In the meantime, when the concentration is more than 70% by mass, the inorganic thin film layer tends to be hardened, so that the film is broken in a secondary processing, such as printing or laminating, to be unfavorably lowered in gas barrier performance. When the Al concentration is 100% by mass, the water vapor barrier performance is good, but the inorganic thin film layer is made of a single material, and therefore the surface of the inorganic thin film layer tends to be smooth. The inorganic thin film layer has poor slipperiness, and therefore defects (wrinkles and acnes and the like) in processing are apt to occur. Silicon oxide referred to herein is a silicon oxide that may be of various types, such as SiO or SiO₂, or any mixture of such oxides, and aluminum oxide referred to herein is an aluminum oxide that may be of various types, such as AlO or Al₂O₃, or any mixture of such oxides.

The film thickness of the inorganic thin film layer is usually from 1 to 100 nm, preferably from 5 to 50 nm. When the film thickness of the inorganic thin film layer is less than 1 nm, the layer may not easily gain a satisfactory gas barrier performance. In the meantime, when the film thickness is set to more than 100 nm to be made excessively large, a gas-barrier-performance-improving effect corresponding to the thickness is not gained to give disadvantages conversely from the viewpoint of flexing resistance and production costs.

### [Protective layer]

In the present invention, when gas barrier performance is further required or processing such as printing is required, a protective layer can also be provided on the inorganic thin film layer. The inorganic thin film layer is not completely a dense film, and has dotted microscopic deficient moieties. By applying, onto the inorganic thin film layer a specific resin composition for protective layer, that will be described later to form the protective layer, a resin in the resin composition for protective layer invades the deficient moieties of the inorganic thin film layer to produce an advantageous effect of stabilizing the gas barrier performance of the laminated layer. Additionally, by using a material having gas barrier performance in the protective layer itself, the laminated film is also largely improved in gas barrier performance. However, it should be noted that the provision of the protective layer causes a cost increase due to an increase in the number of steps, and an environment load depending on a material to be used. It should also be noted that the protective layer changes physical property values such as surface roughness.

In the present invention, the adhesion amount of the protective layer is set into a range preferably from 0.10 to 1.00 g/m². This case allows to control the protective layer evenly in applying for this layer. As a result, the layer becomes a film little in coat unevenness and defect quantity. Moreover, the protective layer itself is improved in cohesive force to strengthen adhesion between the inorganic thin film layer and the protective layer. When the adhesion amount of the protective layer is more than 1. 00 g/m², the laminated film is improved in gas barrier performance but the inside of the protective layer is insufficient in cohesive force and is also lowered in evenness so that the external appearance of the coat undergoes unevenness or defects. Thus, the laminated film may not sufficiently exhibit gas barrier performance nor adhesion. In the meantime, when the film thickness of the protective layer is less than 0.10 g/m², the laminated film may not unfavorably gain a sufficient gas barrier performance nor interlayer adhesion.

Examples of the resin composition used for the protective layer formed on the surface of the inorganic thin film layer of the laminated film of the present invention include a resin composition obtained by adding a curing agent such as an epoxy-based curing agent, an isocyanate-based curing agent, or a melamine-based curing agent to a resin such as a vinyl alcohol-based resin, an urethane-based resin, a polyester-based resin, an acryl-based resin, a titanium-based resin, an isocyanate-based resin, an imine-based resin, or a polybutadiene-based resin.

### [Laminated film]

The laminated film of the present invention is preferably a biaxially oriented film and has a three-layer structure of coating layer/surface layer (B)/substrate layer (A), but may have a four-layer structure of coating layer/surface layer (B)/substrate layer (A)/surface layer (C), a five-layer structure of coating layer/surface layer (B)/substrate layer (A)/intermediate layer (D)/surface layer (C), or a multilayer structure with more layers. When there are a plurality of substrate layers (A), surface layers (B), and surface layers (C), the compositions may be different as long as each layer satisfies the characteristics.

The total thickness of the laminated film of the present invention is preferably 9 um or more and 200 um or less, more preferably 10 µm or more and 150 µm or less, and still more preferably 12 µm or more and 100 µm or less, further preferably 15 µm or more and 80 µm or less.

As the ratio of the thickness of the surface layer (C) to the thickness of the substrate layer (A) in the laminated film of the present invention, the ratio of the thickness of the entire surface layer (C)/the thickness of the entire substrate layer (A) is preferably 0.01 or more and 0.50 or less, more preferably 0.02 or more and 0.40 or less, still more preferably 0.03 or more and 0.30 or less, and particularly preferably 0.04 or more and 0.20 or less. When the entire surface layer (C)/the entire substrate layer (A) is more than 0.50, the haze is increased depending on the amount of the antiblocking agent added, and the transparency is deteriorated.

The thickness of the entire substrate layer (A) with respect to the thickness of the entire film is preferably 50% or more and 99% or less, more preferably 60% or more and 97% or less, particularly preferably 70% or more and 95% or less, and most preferably 80% or more and 92% or less.

The haze of the laminated film of the present invention is preferably 5% or less, more preferably 0.2% or more and 5.0% or less, still more preferably 0.3% or more and 4.5% or less, and particularly preferably 0.40 or more and 4.0% or less. Within the above range, the laminated film may be easily used in applications requiring transparency. The haze tends to be deteriorated, for example, when a stretching temperature and a heat setting temperature are too high, when a cooling roll temperature is high and the cooling rate of an un-stretched (original fabric) sheet is slow, and when the amount of low molecular weight components is too large, and by adjusting them, the haze can be set to be within the above range.

The coating layer-side Martens hardness of the laminated film of the present invention preferably satisfies (a)/(b)≤7.00, where (a) is the Martens hardness measured with a test force of 0.1 mN, and (b) is the Martens hardness measured with a test force of 7 mN. The Martens hardness indicates the hardness of a resin when the surface of the resin is pushed by about 0.1 to 2 µm with a needle tip having a curvature radius of 0.1 µm or less using a dynamic ultra-microhardness meter. The measurement at a test force of 0.1 mN indicates the Martens hardness of the coating layer, and the measurement at a test force of 7 mN indicates the Martens hardness including the substrate film. When the hardness ratio (a)/(b) is 7 or less, followability is increased when physical deformation such as peeling occurs in the substrate film or the coating layer, and adhesion is improved. A preferable range of the ratio of the Martens hardnesses (a) and (b) is (a)/(b)≤7.00, more preferably (a)/(b)<6.00, and still more preferably (a)/(b)≤4.00. Meanwhile, when (a)/(b) is 0.15 or less, the coating layer cannot be satisfactorily formed because the substrate film is hard, and therefore uniformity or cracking may occur. Therefore, a preferable lower limit value of (a)/(b) is 0.15≤(a)/(b), more preferably 0.17≤(a)/(b), and still more preferably 0.25≤(a)/(b).

The Martens hardness (a) is preferably 80 N/mm² or more and 350 N/mm² or less, and more preferably 100 N/mm² or more and 330 N/mm² or less. The Martens hardness (b) is preferably 55 N/mm² or more and 250 N/mm² or less, and more preferably 70 N/mm² or more and 230 N/mm² or less.

By adding ethylene and/or an α-olefin having 4 or more carbon atoms and other copolymerization components at the time of forming the surface layer (B), (a)/(b)≤7.00 can be satisfied. The Martens hardness can also be lowered by lowering the stretching ratio of the film and lowering the orientation of molecular chains. Due to drying heat at the time of forming the coating layer or radiant heat at the time of forming the inorganic thin film layer, the film may become brittle, resulting in change in the hardness thereof, or components derived from the substrate may bleed, resulting in the hard substrate hard, and therefore caution is required.

The total of the maximum peak height (Rp) and maximum valley depth (Rv) of the coating layer side-surface of the laminated film of the present invention measured with a scanning probe microscope (AFM) is suitably 0.1 nm or more and 30.0 nm or less. The maximum peak height (Rp) and the maximum valley depth (Rv) are obtained in accordance with the definition described in JIS-B0601 (1994) after measurement is performed in a range in which measurement lengths in X and Y directions are both 2 µm in a dynamic mode using the scanning probe microscope (AFM), and an obtained image is corrected (slope, line fit, noise line removal).

The maximum peak height (Rp) and the maximum valley depth (Rv) in the 2 µm square range by the AFM are indices indicating relatively large peaks and valleys formed by the antiblocking agent and the lubricant, and when the inorganic thin film layer is laminated on the surface of the coating layer, the formation failure of the inorganic thin film layer due to unevenness or cracking may occur. When the total of the maximum peak height (Rp) and maximum valley depth (Rv) is more than 30.0 nm, the surface unevenness is large, voids occur during the formation of the inorganic thin film, and therefore barrier properties or the like become poor. The total of the maximum peak height (Rp) and maximum valley depth (Rv) of the coating layer-side surface is more preferably 20.0 nm or less, still more preferably 10.0 nm or less, and most preferably 7.0 nm or less.

The laminated film of the present invention preferably has an oxygen permeation rate of 1200 cc/m²/d/atm or less under conditions of 23°C×65% RH from the viewpoint of exhibiting good gas barrier properties when the inorganic thin film layer is laminated. The oxygen permeation rate may be more preferably 1000 cc/m²/d/atm or less, and still more preferably 800 cc/m²/d/atm or less. When the oxygen permeation rate is more than 1200 cc/m²/d/atm, it becomes difficult to cope with applications requiring high gas barrier properties when the inorganic thin film layer is laminated. The oxygen permeation rate is preferably 100 cc/m²/d/atm or more. When the oxygen permeation rate is less than 100 cc/m²/d/atm, barrier performance is excellent, but a residual solvent is less likely to permeate to the outside of a bag when the inorganic thin film layer is laminated, and therefore the amount of the residual solvent transferred to the contents may be relatively increased, which is not preferable. The lower limit of the oxygen permeation rate is preferably 100 cc/m²/d/atm or more, more preferably 200 cc/m²/d/atm or more, and still more preferably 300 cc/m²/d/atm or more.

The laminated film of the present invention preferably has a water vapor permeation rate of 10.0 g/m²/d or less under conditions of 40°C×90% RH from the viewpoint of exhibiting good gas barrier properties when the inorganic thin film layer is laminated. The water vapor permeation rate may be more preferably 8.0 g/m²/d or less, and more preferably 7.0 g/m²/d or less. When the water vapor permeation rate is more than 10.0 g/m²/d, it becomes difficult to cope with applications requiring high gas barrier properties when the inorganic thin film layer is laminated. Meanwhile, when the water vapor permeation rate is less than 1.0 g/m²/d in both cases, barrier performance is excellent, but a residual solvent is less likely to permeate to the outside of a bag, and therefore the amount of the residual solvent transferred to contents may be relatively increased, which is not preferable. A preferable lower limit of the water vapor permeation rate is 1.0 g/m²/d or more.

When the inorganic thin film layer is laminated on the laminated film of the present invention, the oxygen permeation rate under conditions of 23°C×65% RH is preferably 15 cc/m²/d/atm or less. The oxygen permeation rate is more preferably 12 cc/m²/d/atm or less, and still more preferably 10 cc/m²/d/atm or less. A preferable lower limit of the oxygen permeation rate is 0.1 cc/m²/d/atm or more. The water vapor permeation rate under conditions of 40°C×90% RH is preferably 3.0 g/m²/d or less. The water vapor permeation rate is more preferably 2.5 g/m²/d or less, and more preferably 2.0 g/m²/d or less. A preferable lower limit of the water vapor permeation rate is 0.1 g/m²/d or more.

### [Laminated body]

When the laminated film of the present invention is used as a packaging material, it is preferable to form a laminated body on which a heat-sealable resin layer called a sealant is formed. The heat-sealable resin layer is usually provided on the coating layer or inorganic thin film layer side, but may be provided on the outer side of the substrate film layer (the surface opposite to the inorganic thin film forming surface). The heat-sealable resin layer is usually formed by an extrusion lamination method or a dry lamination method. As a thermoplastic polymer that forms the heat-sealable resin layer, any one may be used as long as the sealant adhesiveness can be sufficiently exerted. Polyethylene resins such as olefin-based HDPE, LDPE and LLDPE, a polypropylene resin, an ethylene-vinyl acetate copolymer, an ethylene-α-olefin random copolymer, and an ionomer resin can be used. Among them, LLDPE or a polypropylene resin having high versatility is particularly preferable from the viewpoint of durability, seal strength, price, and monomaterialization. The thickness of the sealant layer is preferably 20 to 100 µm, more preferably 30 to 90 µm, and still more preferably 40 to 80 µm. When the thickness is less than 20 µm, sufficient sealing strength cannot be obtained, and the laminated body may have no tough feeling, resulting in difficult handling. Meanwhile, when the thickness is more than 100 µm, the laminated body has high tough feeling, has deteriorated handleability as a bag, and may be expensive.

The laminate strength of the laminated body of the present invention under conditions of 23°C×65% RH is preferably 1.0 N/15 mm or more, more preferably 1.5 N/15 mm or more, and still more preferably 2.0 N/15 mm or more in both dry and watering evaluations described later. When the laminate strength is less than 1.0 N/15 mm, peeling occurs due to a bending load or heat at the time of sealing, and therefore barrier properties may be deteriorated or contents may leak out. Furthermore, hand-cutting properties may be deteriorated.

### [Adhesive Layer]

For the adhesive layer used in the present invention, a general-purpose adhesive for lamination can be used. For example, it is possible to used solvent (free) type, aqueous type, and hot melt type adhesives containing poly(ester) urethane-based materials, polyester-based materials, polyamide-based materials, epoxy-based materials, poly (meth)acrylic-based materials, polyethyleneimine-based materials, ethylene-(meth)acrylic acid-based materials, polyvinyl acetate-based materials, (modified) polyolefin-based materials, polybutadiene-based materials, wax-based materials, casein-based materials and the like as a main component. Among these, urethane-based or polyester-based materials are preferable in consideration of heat resistance and flexibility that can follow the dimensional changes of each base material. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 g/m² in order to exert sufficient adhesive properties. The coated amount is more preferably 2 to 7 g/m², still more preferably 3 to 6 g/m². When the coated amount is less than 1 g/m², it is difficult to paste the entire surface and the adhesive strength decreases. When the coated amount is more than 8 g/m², it takes time to completely cure the film, unreacted substances are likely to remain, and the adhesive strength decreases.

### [Printed Layers]

Furthermore, in the laminated film, at least one or more printed layers, and one or more different plastic films and/or sheets of paper may be laminated between the substrate film layer and the heat-sealable resin layer, or the outside thereof.

As a printing ink for forming the printed layer, an aqueous and solvent-based resin-containing printing ink can be preferably used. Examples of the resin used in the printing ink include an acrylic resin, a urethane-based resin, a polyester-based resin, a vinyl chloride-based resin, a vinyl acetate copolymer resin, and a mixture thereof. The printing ink may contain known additives such as an anti-static agent, a light blocking agent, an ultraviolet absorber, a plasticizer, a lubricant, a filler, a coloring agent, a stabilizer, a lubricant, a defoaming agent, a crosslinking agent, an anti-blocking agent, and an oxidation inhibitor. A printing method for providing the printing layer is not particularly limited, and known printing methods such as an offset printing method, a gravure printing method, and a screen printing method can be used. In order to dry the solvent after printing, known drying methods such as hot air drying, hot roll drying, and infrared drying can be used.

### Production method

### [Substrate film]

The polypropylene-based laminated film of the present invention is preferably a biaxially oriented film, and can be obtained by melt-extruding the polypropylene-based resin composition constituting the substrate layer (A), the polypropylene-based resin composition constituting the surface layer (B), and the polypropylene-based resin composition constituting the surface layer (C) by separate extruders, co-extruding the compositions from a die, cooling the compositions with a cooling roll to form an un-stretched sheet, stretching the un-stretched sheet in a machine direction (MD) and a transverse direction (TD), and then subjecting the sheet to a heat set treatment. It is preferable that the surface layer (B) is extruded so as to be in contact with the cooling roll. When the surface layer (B) is a surface opposite to a surface in contact with the cooling roll, the polypropylene resin is slowly cooled, and the degree of crystallinity is increased, and therefore the arithmetic average roughness (Ra) of the surface of the surface layer (B) may be too large due to surface unevenness caused by spherulites.

The melt-extruding temperature is preferably about 200 to 280°C, and in order to obtain a laminated film having a good appearance without disturbing the layers within this temperature range, the viscosity difference (MFR difference) between a polypropylene raw material for the substrate layer (A) and a polypropylene raw material for the surface layer (B) is preferably 6.0 g/10 min or less. When the viscosity difference is more than 6 g/10 min, the layers are apt to be disturbed, resulting in a poor appearance. The viscosity difference is more preferably 5.5 g/10 min or less, and still more preferably 5.0 g/10 min or less.

The surface temperature of the cooling roll is preferably 25 to 35°C, and more preferably 27 to 33°C. When the temperature of the cooling roll is higher than 35°C, the degree of crystallinity of the polypropylene resin is increased, and therefore the arithmetic average roughness (Ra) of the surface of the surface layer (B) may become too large due to the surface unevenness caused by the formed spherulites.

The lower limit of the stretching ratio in the machine direction (MD) is preferably 3 times, and more preferably 3.5 times. When the stretching ratio is less than the above, film thickness uniformity may occur. The upper limit of the MD stretching ratio is preferably 8 times, and more preferably 7 times. When the stretching ratio is more than the above, it may be difficult to continuously perform TD stretching. The lower limit of the MD stretching temperature is preferably 120°C, more preferably 125°C, and still more preferably 130°C. When the stretching temperature is less than the above, a mechanical load may be increased, the thickness uniformity may be increased, or the surface of the film may be roughened. The upper limit of the MD stretching temperature is preferably 160°C, more preferably 155°C, and still more preferably 150°C. A higher temperature is preferable for a decrease in a heat shrinkage rate, but the film may adhere to a roll and therefore the film cannot be stretched, or surface roughness may occur.

The lower limit of the stretching ratio in the transverse direction (TD) is preferably 4 times, more preferably 5 times, and still more preferably 6 times. When the stretching ratio is less than the above, film thickness uniformity may occur. The upper limit of the TD stretching ratio is preferably 20 times, more preferably 17 times, still more preferably 15 times, and particularly preferably 12 times. When the TD stretching ratio is more than the above, the heat shrinkage rate may be increased or the film may be broken during stretching. A preheating temperature in TD stretching is preferably set to be higher by 5 to 15°C than the stretching temperature in order to quickly raise the film temperature to around the stretching temperature. The lower limit of the TD stretching temperature is preferably 150°C, more preferably 155°C, still more preferably 158°C, and particularly preferably 160°C. When the TD stretching temperature is less than the above, the film may be broken without being sufficiently softened, or the heat shrinkage rate may be increased. The upper limit of the TD stretching temperature is preferably 170°C, more preferably 168°C, and still more preferably 165°C. In order to lower the heat shrinkage rate, it is preferable that the temperature is high, but when the temperature is higher than the above, not only orientation is lowered due to the melting and recrystallization of low molecular weight components, but also surface roughness and the whitening of the film may occur.

The stretched film is subjected to heat setting. The lower limit of the heat setting temperature is preferably 163°C, and more preferably 165°C. When the heat setting temperature is less than the above, the heat shrinkage rate may be increased. A treatment for a long time is required in order to lower the heat shrinkage rate, and therefore productivity may be deteriorated. The upper limit of the heat setting temperature is preferably 176°C, and more preferably 175°C. When the heat setting temperature is higher than the above, surface roughness and the whitening of the film may occur due to the melting and recrystallization of low molecular weight components.

It is preferable to relax the film at the time of heat setting. The lower limit of the relaxation ratio is preferably 2%, and more preferably 3%. When the relaxation ratio is less than the above, the heat shrinkage rate may be increased. The upper limit of the relaxation rate is preferably 10%, and more preferably 8%. When the relaxation rate is more than the above, thickness uniformity may be increased.

Furthermore, in order to reduce the heat shrinkage rate, the film produced in the above step can be once wound into a roll and then annealed offline.

The biaxially oriented polypropylene-based laminated film thus obtained is subjected to corona discharge, a plasma treatment, or a flame treatment or the like as necessary, and then wound up with a winder, and therefore a biaxially oriented polypropylene film roll of the present invention can be obtained.

### [Coating Layer]

A method for coating with the resin composition for coating layer is not particularly limited as long as a layer is formed by coating the film surface. For example, a usual coating method such as gravure coating, reverse roll coating, wire bar coating, or die coating can be adopted.

In forming the coating layer, heating and drying are preferably carried out after the resin composition for coating layer is applied. The drying temperature at that time is preferably 100 to 180 °C, more preferably 110 to 170 °C, even more preferably 130 to 160 °C. When the drying temperature is lower than 110°C, insufficient drying may occur in the coating layer, or the formation of the coating layer does not proceed, and therefore a cohesive force and water-resistant adhesiveness may be deteriorated, resulting in deterioration in barrier properties and hand-cutting properties. Meanwhile, when the drying temperature is higher than 190°C, the film is excessively heated, and therefore the film may be brittle, resulting in a decrease in puncture strength, or the film may shrink, resulting in deterioration in processability. In particular, by drying at 130°C or higher, the formation of the coating layer effectively proceeds, and therefore water-resistant adhesiveness can be improved. The coating film is particularly preferable because a uniform film can be obtained when a solvent is first volatilized under a relatively low temperature condition of about 90°C to 110°C immediately after coating and then dried at 130°C or higher. In addition to drying, it is also more effective to perform an additional heat treatment in a low temperature range as much as possible in order to advance the formation of the coating layer.

### [Inorganic thin film layer]

The method for forming the inorganic thin film layer is not particularly limited. A known vapor deposition method may be appropriately adopted, examples thereof including physical vapor deposition methods (PVD method) such as vacuum vapor deposition, sputtering and ion plating methods, and a chemical vapor deposition method (CVD method). The following will describe a typical method for forming the inorganic thin film layer, giving a silicon-oxide/aluminum-oxide based thin film as an example. In the case of adopting, for example, a vacuum vapor deposition method, it is preferred to use, as a vapor deposition raw material, for example, a mixture of SiO₂ and Al₂O₃, or a mixture of SiO₂ and Al. As the vapor deposition raw material, particles are usually used. At this time, the size of the individual particles is desirably a size that does not permit the pressure at the time of the vapor deposition to be changed. The particle size is preferably from 1 to 5 mm. For heating the particles, for example, the following manner may be adopted: resistance heating, high frequency induction heating, electron beam heating or laser heating. As a reactive gas, oxygen, nitrogen, hydrogen, argon, carbon dioxide gas, or water vapor may be introduced into the reaction system. Reactive vapor deposition using ozone addition, ion assist or some other means may also be adopted. Furthermore, any change may be applied also to film-forming conditions, for example, bias is applied to a body which vapor deposition is to be applied (a laminated film to be supplied for vapor deposition), or this body is heated or cooled. Also in the case of adopting a sputtering or CVD method, change may be made about, for example, such a vapor deposition raw material, a reactive gas, bias to a body which vapor deposition is to be applied, and/or heating/cooling.

### [Protective Layer]

A method for coating with the resin composition for protective layer is not particularly limited as long as a layer is formed by coating the film surface. For example, a usual coating method such as gravure coating, reverse roll coating, wire bar coating, or die coating can be adopted.

In forming the protective layer, heating and drying are preferably carried out after the resin composition for protective layer is applied. The drying temperature at that time is preferably 100 to 160 °C, more preferably 105 to 155 °C, even more preferably 110 to 150 °C. When the drying temperature is lower than 100°C, insufficient drying may occur in the protective layer, or the formation of the protective layer does not proceed, and therefore a cohesive force and water-resistant adhesiveness may be deteriorated, resulting in deterioration in barrier properties and hand-cutting properties. Meanwhile, when the drying temperature is higher than 160°C, the film is excessively heated, and therefore the film may be brittle, resulting in a decrease in puncture strength, or the film may shrink, resulting in deterioration in processability. In particular, by drying at 100°C or higher, and preferably 110°C or higher, the formation of the protective layer effectively proceeds, and the adhesion area between the resin of the protective layer and the inorganic thin film layer is further increased, and therefore water-resistant adhesiveness can be improved. The protective film is particularly preferable because a uniform film can be obtained when a solvent is first volatilized under a relatively low temperature condition of about 90°C immediately after coating and then dried at 100°C or higher. In addition to drying, it is also more effective to perform an additional heat treatment in a low temperature range as much as possible in order to advance the formation of the protective layer.

### EXAMPLES

Next, the present invention will be described in more detail by way of Examples, but the present invention is not limited to the following examples. The evaluation of films was performed by the following measurement methods.

### [Measuring method]

### (1) Thickness (µm)

The thickness of each layer was measured by cutting a laminated film of the present invention embedded in a modified urethane resin with a microtome and observing the cross section of the laminated film with a differential interference microscope.

### (2) Martens hardness (N/mm²)

A sample of about 2 cm square was cut out from the obtained laminated film, and a pressure-sensitive adhesive was used to secure a surface opposite to a coating layer-side surface that was to be measured onto a glass plate having a thickness about 1 mm. Then, the sample was left to stand for 12 hours in an environment of 23°C and 50% RH to be conditioned. The sample was measured under the following measurement conditions by a method in accordance with IS014577-1 (2002) using a dynamic ultramicrohardness tester ("DUH-211" manufactured by Shimadzu Corporation). Measurement was performed 10 times at different positions of the film. The maximum and minimum values were discarded, and the average value of the remaining 8 points was obtained.

### <Measurement conditions>

### (Setting)

- Measuring environment: Temperature 23°C and relative humidity 50%
- Test mode: Load-unload test
- Indenter used: Dihedral angle 115 degrees, triangular pyramid indenter
- Elastic modulus of indenter: 1.140×10⁶ N/mm²
- Poisson's ratio of indenter: 0.07
- Cf-Ap, As correction: Yes

### (Condition a)

- Test force: 0.10 mN
- Load speed: 0.0050 mN/sec
- Load holding time: 5 sec
- Unload holding time: 0 sec

### (Condition b)

- Test force: 7.00 mN
- Load speed: 1.4632 mN/sec
- Load holding time: 5 sec
- Unload hold time: 0 sec

### (3) Maximum peak height (Rp) and maximum valley depth (Rv) (nm)

The maximum peak height (Rp) and maximum valley depth (Rv) of the coating layer-side surface of the obtained laminated film were measured using a scanning probe microscope ("SPM-9700" manufactured by Shimadzu Corporation). Measurement was performed in a dynamic mode in a range in which both measurement lengths in X and Y directions were 2 um, and the obtained image was corrected (tilt, line fitting, noise line removal), and the maximum peak height (Rp) and the maximum valley depth (Rv) were then obtained according to the definition described in JIS-B0601 (1994).

### (4) Amount of adhesion of coating layer

In each of Examples and Comparative Examples, each laminated film obtained at the stage of laminating a coating layer on a substrate film was used as a sample, and a 100 mm×100 mm test piece was cut out from this sample. The coating layer was wiped with acetone, and an amount of adhesion was calculated from the mass change of the film before and after wiping.

### (5) Composition and film thickness of inorganic thin film layer

The film thickness and composition of the laminated film (after lamination of a thin film) obtained in each of Examples and Comparative Examples were measured by a calibration curve prepared in advance using an X-ray fluorescence analyzer ("ZSX 100e" manufactured by Rigaku Corporation). The conditions of an x-ray excitation tube were 50 kV and 70 mA.

### (6) Method for evaluating laminate strength

A laminated body prepared by a method described later was cut into a test piece having a width of 15 mm and a length of 200 mm, and the laminate strength of the test piece was measured using a Tensilon universal material testing machine ("Tensilon UMT-II-500 type" manufactured by Toyo Baldwin Co., Ltd.) under conditions of a temperature of 23°C and a relative humidity of 65%. In the measurement of the laminate strength, a tensile speed was set to 200 mm/min, the laminated film layer and a heat-sealable resin layer of the laminated film obtained in each of Examples and Comparative Examples were peeled off at a peeling angle of 90 degrees, and strength in the case where water was dropped on the peeled part with a dropper (watering) and strength in the case where water was not dropped on the peeled part (dry) were measured.

### (7) Method for evaluating oxygen permeation rate

In each of Examples and Comparative Examples, the oxygen permeation rate of a laminated film or laminated body described later as a sample was measured in an atmosphere at a temperature of 23°C and a humidity of 65% RH using an oxygen permeation rate measuring apparatus ("OX-TRAN (registered trademark) 1/50" manufactured by MOCON) according to the JIS-K7126 B method. The oxygen permeation rate was measured in a direction in which oxygen permeated from a surface layer (C) side.

### (8) Method for evaluating water vapor permeation rate

In each of Examples and Comparative Examples, the water vapor permeation rate of a laminated film or a laminated body described later as a sample was measured in an atmosphere at a temperature of 40°C and a humidity of 90% RH using a water vapor permeation rate measuring apparatus ("PERMATRAN-W 3/33MG" manufactured by MOCON) according to the JIS-K7129 B method. The water vapor permeation rate was measured in a direction in which water vapor permeated from a surface layer (C) side.

### (9) Appearance evaluation method

In each of Examples and Comparative Examples, the appearance of the coating layer-side surface was visually evaluated after the coating layer was laminated.
∘: Good without occurrence of defects
×: Any drawback of wrinkles, coating uniformity, and cissing occurs.

### [Preparation of substrate film]

### (OPP-1)

For a substrate layer (A), a polypropylene homopolymer PP-1 shown in Table 1 was used.

For a surface layer (B), there was used a blend of 43.2% by weight of a polypropylene homopolymer PP-2 shown in Table 1, 52.0% by weight of an ethylene copolymerization polypropylene polymer PP-4 shown in Table 1, and 4.8% by weight of an antiblocking agent-containing masterbatch FTX0627G. At this time, the melt flow rate (g/10 min) of a polypropylene-based resin composition constituting the surface layer (B) was 5.1.

For a surface layer (C), there was used a blend of 93.6% by weight of a polypropylene homopolymer PP-1 shown in Table 1 and 6.4% by weight of an antiblocking agent-containing masterbatch FTX0627G.

Using a 45 mm extruder for the substrate layer (A), a 25 mm extruder for the surface layer (B), and a 20 mm extruder for the surface layer (C), raw material resins were melted at 250°C, co-extruded from a T die into a sheet, cooled and solidified so that the surface layer (B) was in contact with a cooling roll at 30°C, and then stretched 4.5 times in a machine direction (MD) at 135°C. Then, in a state where both ends in a film transverse direction (TD) were pinched by clips in a tenter, the film was preheated at 173°C, then stretched 8.2 times in the transverse direction (TD) at 164°C, and subjected to heat setting at 171°C while being relaxed by 6.7% in the transverse direction (TD). The film formation condition at this time was defined as a film formation condition a.

Thus, a biaxially oriented polypropylene-based film having a structure of surface layer (B)/substrate layer (A)/surface layer (C) was obtained.

The surface of the surface layer (B) of the biaxially oriented polypropylene-based film was subjected to a corona treatment under a condition of an applied current value: 0.75 A using a corona treatment machine manufactured by Softal Corona and Plasma GmbH, and then wound up with a winder. The thickness of the obtained film was 20 um (the thicknesses of the surface layer (B), substrate layer (A), and surface layer (C) were respectively 1.3 um, 17.7 um, and 1.0 µm).

### (OPP-2)

For a substrate layer (A), there was used a blend of 99.0% by weight of a polypropylene homopolymer PP-2 shown in Table 1 and 1.0% by weight of stearyl diethanolamine stearate (KYM-4K manufactured by Matsumoto Yushi Co., Ltd.) as an anti-static agent.

For a surface layer (B), there was used a blend of 43.2% by weight of a polypropylene homopolymer PP-2 shown in Table 1, 52.0% by weight of an ethylene copolymerization polypropylene polymer PP-4 shown in Table 1, and 4.8% by weight of an antiblocking agent-containing masterbatch FTX0627G. At this time, the melt flow rate (g/10 min) of a polypropylene-based resin composition constituting the surface layer (B) was 5.1.

For a surface layer (C), there was used a blend of 93.6% by weight of a polypropylene homopolymer PP-2 shown in Table 1 and 6.4% by weight of an antiblocking agent-containing masterbatch FTX0627G.

Using a 45 mm extruder for the substrate layer (A), a 25 mm extruder for the surface layer (B), and a 20 mm extruder for the surface layer (C), raw material resins were melted at 250°C, co-extruded from a T die into a sheet, cooled and solidified so that the surface layer (B) was in contact with a cooling roll at 30°C, and then stretched 4.5 times in a machine direction (MD) at 125°C. Then, in a state where both ends in a film transverse direction (TD) were pinched by clips in a tenter, the film was preheated at 168°C, then stretched 8.2 times in the transverse direction (TD) at 155°C, and subjected to heat setting at 165°C while being relaxed by 6.7% in the transverse direction (TD). The film formation condition at this time was defined as a film formation condition b.

Thus, a biaxially oriented polypropylene-based film having a structure of surface layer (B)/substrate layer (A)/surface layer (C) was obtained.

The surface of the surface layer (B) of the biaxially oriented polypropylene-based film was subjected to a corona treatment under a condition of an applied current value: 0.75 A using a corona treatment machine manufactured by Softal Corona and Plasma GmbH, and then wound up with a winder. The thickness of the obtained film was 20 µm (the thicknesses of the surface layer (B), substrate layer (A), and surface layer (C) were respectively 1.3 µm, 17.7 um, and 1.0 µm).

### (OPP-3)

A 20 um biaxially oriented polypropylene-based film was obtained under the same conditions as in the OPP-2 except that the amount of the polypropylene homopolymer PP-2 used in the substrate layer (A) of the OPP-2 was changed to 100% by weight.

### (OPP-4)

As a substrate layer (A), there was used a blend of 60.0% by weight of a polypropylene homopolymer PP-2 shown in Table 1 and 40.0% by weight of PP-3.

For a surface layer (B), there was used a blend of 96.4% by weight of a polypropylene homopolymer PP-2 shown in Table 1 and 3.6% by weight of an antiblocking agent-containing masterbatch FTX0627G.

For a surface layer (C), there was used a blend of 94.0% by weight of a polypropylene homopolymer PP-2 shown in Table 1 and 6.0% by weight of an antiblocking agent-containing masterbatch FTX0627G.

A biaxially oriented polypropylene-based film having a structure of surface layer (B)/substrate layer (A)/surface layer (C) was obtained under the film formation condition of b shown in Table 3.

The surface of the surface layer (B) of the biaxially oriented polypropylene-based film was subjected to a corona treatment under a condition of an applied current value: 0.75 A using a corona treatment machine manufactured by Softal Corona and Plasma GmbH, and then wound up with a winder. The thickness of the obtained film was 20 um (the thicknesses of the surface layer (B), substrate layer (A), and surface layer (C) were respectively 1.0 µm, 18.0 µm, and 1.0 µm).

### [Preparation of coating layer]

Hereinafter, a method for preparing a coating layer used in each of Examples and Comparative Examples will be described.

### [Coating liquid 1]

With a solution obtained by dissolving 0.25 parts by mass of a silane coupling agent (I); "DF-ADDITIVE AES" manufactured by DIC Corporation in 1.43 parts by mass of acetone, 3.74 parts by mass of isocyanate (II); "DF-HARDNER HX-75" manufactured by DIC Corporation was mixed, and the mixture was stirred for 10 min using a magnetic stirrer. The obtained prepared liquid was diluted with 72.06 parts by mass of methyl ethyl ketone and 12.72 parts by mass of 1-methoxy-2-propanol (hereinafter referred to as PGM). Into the prepared liquid, 9.80 parts by mass of a polyester resin (III); "DF-COAT GEC-004C" manufactured by DIC Corporation was further added to obtain a desired coating liquid 1.

### [Coating liquid 2]

Into 90 parts by mass of purified water, 10 parts by mass of a completely saponified polyvinyl alcohol resin (manufactured by Nippon Synthetic Chemical Industry Co., Ltd., trade name: G Polymer OKS8049Q, (saponification degree: 99.0% or more, average polymerization degree: 450) was added. The mixture was heated to 80°C while being stirred, and then stirred for about 1 hour. Thereafter, the mixture was cooled to room temperature, thereby obtaining a substantially transparent polyvinyl alcohol solution (PVA solution) having a solid content of 10%. 50.00 parts by mass of the PVA solution was mixed with a mixed solution of 35.00 parts by mass of purified water and 15.00 parts by mass of 2-propanol to obtain a desired coating liquid 2.

### [Coating liquid 3]

Into a mixed solution of 53.20 parts by mass of purified water and 22.80 parts by mass of 2-propanol, 24.00 parts by mass of WPB-531 manufactured by Mitsui Chemicals, Inc. was added, followed by stirring to obtain a desired coating liquid 3.

### [Preparation of laminated film]

### (Examples 1 and 2)

OPP-1 was used as a substrate film, and a coating liquid 1 was used as a coating layer. The coating liquid 1 was applied onto the corona-treated surface of the substrate film by a gravure roll coating method, predried at 100°C, and then mainly dried at 130°C. The amount of adhesion of the coating layer at this time was 0.80 g/m². Thereafter, a post-heat treatment was performed at 40°C for 2 days to obtain a desired laminated film.

### (Example 3)

A desired laminated film was obtained under the same conditions as in Example 1 except that a substrate film was changed to OPP-2.

### (Example 4)

A desired laminated film was obtained under the same conditions as in Example 1 except that a substrate film was changed to OPP-3.

### (Example 5)

A desired laminated film was obtained under the same conditions as in Example 1 except that the amount of adhesion of a coating layer was changed to 0.20 g/m².

### (Example 6)

A desired laminated film was obtained under the same conditions as in Example 1 except that the amount of adhesion of a coating layer was changed to 1.00 g/m².

### (Example 7)

A desired laminated film was obtained under the same conditions as in Example 1 except that main drying was performed at 110°C.

### (Example 8)

A desired laminated film was obtained under the same conditions as in Example 1 except that main drying was performed at 150°C.

### (Comparative example 1)

A coating layer was not laminated on OPP-1 used as a substrate film.

### (Comparative example 2)

A desired laminated film was obtained under the same conditions as in Example 1 except that a substrate film was changed to OPP-4.

### (Comparative example 3)

A desired laminated film was obtained under the same conditions as in Example 1 except that a coating liquid 2 was used for a coating layer.

### (Comparative example 4)

A desired laminated film was obtained under the same conditions as in Example 1 except that a coating liquid 3 was used for a coating layer.

### (Comparative example 5)

A desired laminated film was obtained under the same conditions as in Example 1 except that the amount of adhesion of a coating layer was changed to 1.20 g/m².

### [Formation of inorganic thin film layer]

Hereinafter, a method for preparing an inorganic thin film layer used in each of Examples and Comparative Examples will be described.

### (M-1; Example 2 and Comparative examples 1 and 3)

As an inorganic thin film layer M-1, a composite oxide layer composed of silicon dioxide and aluminum oxide was formed on the coating layer by an electron beam vapor-deposition method. Particulate SiO₂ (purity: 99.9 %) and Al₂O₃ (purity: 99.9%) having a size of about 3 mm to 5 mm were used as a vapor-deposition source. The film thickness of the inorganic thin film layer (SiO₂/Al₂O₃ composite oxide layer) in the film (inorganic thin film layer/coating layer-containing film) obtained as described above was 13 nm. The composition of the composite oxide layer was SiO₂/Al₂O₃ (mass ratio)=60/40.

### (M-2; Examples 1 and 3 to 8 and Comparative examples 2 and 4)

As an inorganic thin film layer M-2, metal aluminum was vapor-deposited on the coating layer. After the pressure was reduced to 10-3 Pa or less using a small vacuum vapor-deposition apparatus (VWR-400/ERH, manufactured by ULVAC KIKO, Inc.), an aluminum foil having a purity of 99.9% was set in a vapor-deposition source CF-305W manufactured by Nilaco Corporation from the lower portion of the substrate. The metal aluminum was evaporated by heating, and attached and deposited on the film to form a metal aluminum film having a thickness of 40 nm.

### [Preparation of laminated body]

A polyurethane-based adhesive (TM569/cat10L manufactured by Toyo Morton Co., Ltd.) was applied onto the laminated film obtained in each of Examples and Comparative Examples so that a thickness after a drying treatment at 80°C was 3 um. Then, an un-stretched polypropylene film (P1128 manufactured by Toyobo Co., Ltd.; thickness: 30 um; CPP) was dry-laminated, followed by aging at 40°C for 4 days to obtain a laminated body for evaluation.

The laminated film and the laminated body were prepared as described above. Raw materials and production methods of the films used in the above Examples and Comparative Examples are shown in Tables 1 to 3. The results of performing various evaluations on the obtained laminated films are shown in Table 4.

**[Table 1]**

| Polypropylene-based resin | PP-1 | PP-2 | PP-3 | PP-4 |
|---|---|---|---|---|
| Raw material monomer | Propylene | Propylene | Propylene | Propylene, ethylene |
| Resin stereoregularity (meso-pentad fraction (%)) | 98.7 | 98.4 | 98.9 | Unmeasurable |
| Amount of ethylene copolymerization (mol%) | 0.0 | 0.0 | 0.0 | 3.0 |
| MFR (g/10 min, 230°C, 2.16 kgf) | 7.6 | 3.0 | 1.9 | 7.0 |
| Molecular weight (Mn) | 67,500 | 79,400 | 80,000 | 80,000 |
| Molecular weight (Mw) | 270,000 | 312,000 | 360,000 | 220,000 |
| Molecular weight distribution (Mw/Mn) | 4.0 | 3.9 | 4.5 | 2.7 |
| DSC melting peak temperature (°C) | 168.0 | 163.9 | 163.3 | 125.3 |
| DSC melting peak area (J/g) | 105.2 | 98.6 | 94.3 | 64.3 |

**[Table 2]**

| Film formation condition | a | b |
|---|---|---|
| Molten resin temperature (°C) | 250 | 250 |
| Cooling roll temperature (°C) | 30 | 30 |
| Stretching ratio in machine direction (times) | 4.5 | 4.5 |
| Stretching temperature in machine direction (°C) | 135 | 125 |
| Stretching ratio in transverse direction (times) | 8.2 | 8.2 |
| Stretching preheating temperature in transverse direction (°C) | 173 | 168 |
| Stretching temperature in transverse direction (°C) | 164 | 155 |
| Heat setting temperature (°C) | 171 | 165 |
| Relaxation rate in transverse direction (%) | 6.7 | 6.7 |

**[Table 3]**

| | | | | | OPP-1 | OPP-2 | OPP-3 | OPP-4 |
|---|---|---|---|---|---|---|---|---|
| Substrate layer (A) | Raw material, | PP-1 | | % by weight | 100.00 | 0.00 | 0.00 | 0.00 |
| | | PP-2 | | % by weight | 0.00 | 99.00 | 100.00 | 60.00 |
| | | PP-3 | | % by weight | 0.00 | 0.00 | 0.00 | 40.00 |
| | | Anti-static agent | | % by weight | 0.00 | 1.00 | 0.00 | 0.00 |
| | Thickness | | | µm | 17.7 | 17.7 | 17.7 | 18 |
| Surface layer (B) | Raw material | PP-2 | | % by weight | 43.2 | 43.2 | 43.2 | 96.4 |
| | | PP-4 | | 1 by weight | 52.0 | 52.0 | 52.0 | 0.0 |
| | | Antiblocking agent-containing masterbatch | Ratio | a by weight | 4.8 | 4.8 | 4.8 | 3.6 |
| | | | Product name | - | FTX0627G | FTX0627G | FTX0627G | FTX0627G |
| | | | Antiblocking agent | - | Silica particle | Silica particle | Silica particle | Silica particle |
| | | | Average particle diameter | µm | 2.7 | 2.7 | 2.7 | 2.7 |
| | | | Content of antiblocking agent | ppm by weight | 50000 | 50000 | 50000 | 50000 |
| | | | MFR of polypropylene resin | g/10 min, 230°C, 2.16 kgf | 3 | 3 | 3 | 3 |
| | | Content of antiblocking agent | | ppm by weight | 2400 | 2400 | 2400 | 1800 |
| | Thickness | | | µm | 1.3 | 1.3 | 1.3 | 1.0 |
| | Surface treatment | | | | Corona treatment | Corona treatment | Corona treatment | Corona treatment |
| Surface layer (C) | Raw material | FP-1 | | % by weight | 93.6 | 0.0 | 0.0 | 0.0 |
| | | PP-2 | | 9- by weight | 0.0 | 93.6 | 93.6 | 94.0 |
| | | Antiblocking agent-containing masterbatch | Ratio | % by weight | 6.4 | 6.4 | 6.4 | 6.0 |
| | | | Product name | - | FTX0627G | FTX0627G | FTX0627G | FTX0627G |
| | | | Antiblocking agent | - | Silica particle | Silica particle | Silica particle | Silica particle |
| | | | Average particle diameter | µm | 2.7 | 2.7 | 2.7 | 2.7 |
| | | | Content of antiblocking agent | ppm by weight | 50000 | 50000 | 50000 | 50000 |
| | | | MFR of polypropylene resin | g/10 min, 230°C, 2.16 kgf | 3 | 3 | 3 | 3 |
| | | Content of antiblocking agent | | ppm by weight | 3200 | 3200 | 3200 | 3000 |
| | Thickness | | | µm | 1.0 | 1.0 | 1.0 | 1.0 |
| | Surface treatment | | | | No treatment | No treatment | No treatment | No treatment |
| Blending amount in film | | PP-1 | | % by weight | 93.18 | 0.00 | 0.00 | 0.00 |
| | | PP-2 | | % by weight | 2.81 | 95.10 | 95.99 | 53.52 |
| | | PP-3 | | % by weight | 0.00 | 0.00 | 0.00 | 36.00 |
| | | PP-4 | | % by weight | 3.38 | 3.38 | 3.38 | 0.00 |
| | | Anti-static agent | | % by weight | 0.00 | 0.89 | 0.00 | 0.00 |
| | | Antiblocking agent-containing masterbatch | | % by weight | 0.63 | 0.63 | 0.63 | 0.48 |
| | | Content of antiblocking agent | | ppm | 316 | 316 | 316 | 240 |
| Film formation condition (see table 2) | | | | | a | b | b | b |

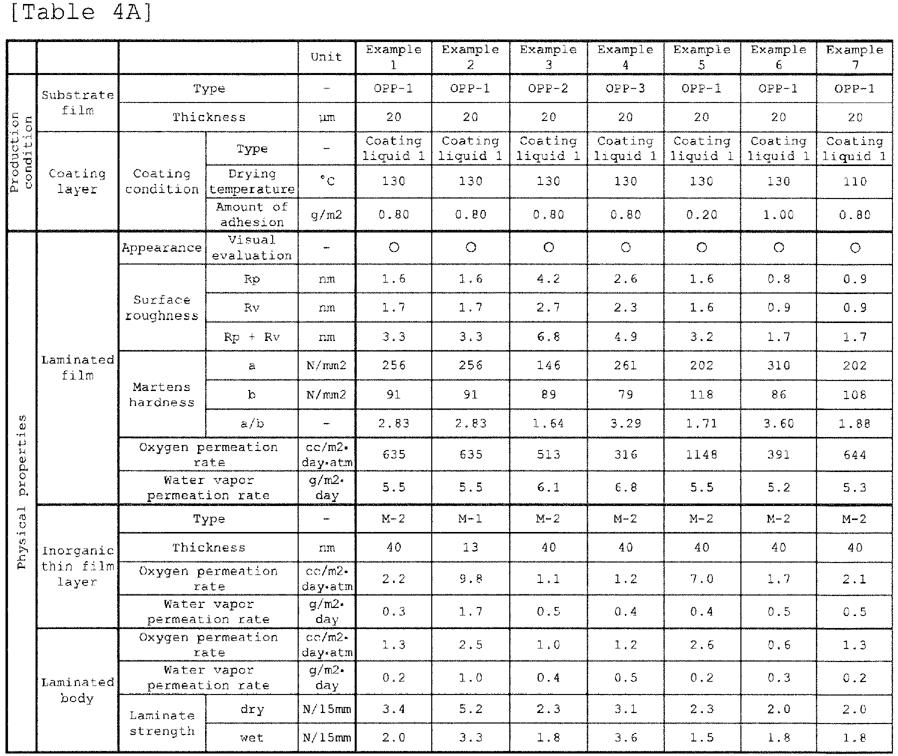

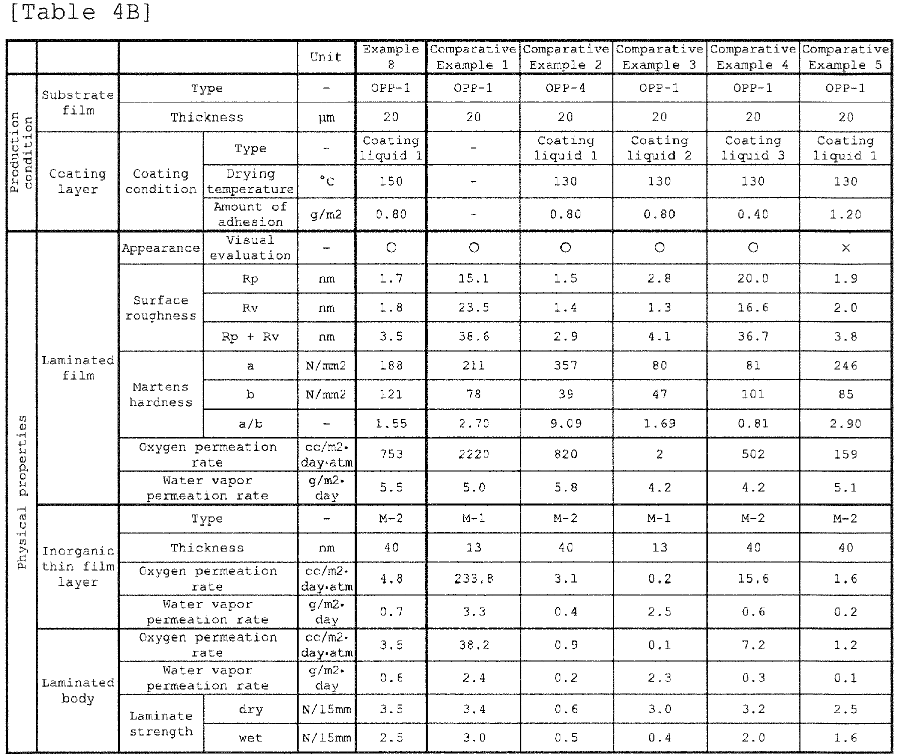

### INDUSTRIAL APPLICABILITY

According to the present invention, it is possible to provide a laminated film which can form a laminated structure mainly composed of a polypropylene film and composed of substantially a single resin species having a low environmental load, and has gas barrier properties and adhesiveness required for a packaging material when an inorganic thin film layer is laminated.

## Claims

1. A laminated film comprising: a substrate layer (A) mainly composed of a polypropylene-based resin; a surface layer (B) on at least one surface of the substrate layer (A); and a coating layer laminated on the surface layer (B), wherein the laminated film satisfies the following requirements (I) to (III):
(I) (a)/(b)≤7.00 is satisfied, where (a) is Martens hardness of a coating layer-side surface measured with a test force of 0.1 mN, and (b) is Martens hardness of the coating layer-side surface measured with a test force of 7 mN;
(II) a total of a maximum peak height (Rp) and maximum valley depth (Rv) of the coating layer-side surface measured with a scanning probe microscope is 30.0 nm or less; and
(III) an oxygen permeation rate measured under conditions of 23°C×65% RH is 100 cc/m²/day/atm or more and 1200 cc/m²/day/atm or less.

2. The laminated film according to claim 1, comprising an inorganic thin film layer laminated on the coating layer of the laminated film.

3. The laminated film according to claim 1 or 2, wherein an amount of adhesion of the coating layer is 0.10 g/m² or more and 1.00 g/m² or less.

4. A laminated body obtained by laminating an olefin-based sealant layer on one surface of the laminated film according to any one of claims 1 to 3.

5. The laminated body according to claim 4, wherein the laminated body has laminate strength of 1.0 N/15 mm or more.
